# EUROPEAN PATENT APPLICATION

(11) **EP 4 793 794 A1**
(43) Date of publication of application: **19.08.2026**
(21) Application number: 26157304.2
(22) Date of filing: 09.02.2026
(51) Int. Cl.: G06F 16/3329, G06F 40/35, G06N 3/094, G06F 40/216, G06F 40/279

(54) **KNOWLEDGE GAP DETECTION FOR AGENTIC CONVERSATION**

(30) Priority: 14.02.2025 US 202519054313
(71) Applicant: Capital One Services, LLC, McLean, Virginia 22102 (US)
(72) Inventor: KUMAR, Anoop, McLean, VA 22102 (US); SAMUEL, Alfy, McLean, VA 22102 (US); ZHU, Chenyang, McLean, VA 22102 (US); LIU, Daben, McLean, VA 22102 (US)
(74) Representative: Boult Wade Tennant LLP

(57) **Abstract**

A method and related system may reduce hallucinatory text generation by using shuffled training data.

## Description

### SUMMARY

Language models may be trained to process, understand, and generate human-comprehensible text across various domains. These models utilize complex neural networks or other machine learning models trained on datasets to perform tasks such as language translation, content generation, and complex reasoning. While language models demonstrate significant capabilities in processing information, they may carry the risk of generating hallucinations-fabricated or inaccurate content that appears credible but lacks factual basis. Hallucinations emerge from the statistical nature of language prediction, where models construct responses based on probabilistic patterns rather than true comprehension, potentially leading to the creation of misleading or entirely false information.

Large Language Model (LLM) hallucination mitigation involves advanced techniques like confidence value techniques, which generate probabilistic scores to indicate the potential reliability of generated content. These confidence metrics may measure prediction variance and aim to provide transparency about the model's understanding and potential accuracy of responses. However, the approach suffers from fundamental limitations, as the same probabilistic system generating potentially unreliable content also produces its own potentially misleading confidence assessment.

Some embodiments may resolve such issues and other issues by directly training a language to recognize context-sufficient and context-insufficient data in the same training session. Some embodiments may retrieve training samples comprising training contexts and training prompts, wherein each respective training sample comprises a respective context and a respective training prompt. For example, some embodiments may retrieve a training set of 5,000 data samples, each sample including context text, prompt text, and answer text. Some embodiments may generate shuffled training samples by shuffling the training contexts. For example, some embodiments may change the association of a first context that is originally associated with a first prompt to an association between the first context and a second prompt. Some embodiments may train a language model based on the shuffled training samples and a training answer indicating a knowledge gap. After generating the trained language model, some embodiments may then use the trained language model to generate a response indicating the knowledge gap by providing the language model with a new prompt and an associated new context.

By performing operations and using related devices described in this disclosure, some embodiments may significantly reduce the likelihood of generating hallucinatory text by utilizing shuffled training data. This approach ensures that language models are exposed to diverse contexts and prompts, enhancing their ability to recognize and indicate knowledge gaps accurately. Consequently, some embodiments may provide more reliable and contextually appropriate responses.

Various other aspects, features, and advantages of the invention will be apparent through the detailed description of the invention and the drawings attached hereto. It is also to be understood that both the foregoing general description and the following detailed description are examples and are not restrictive of the scope of the invention.

### BRIEF DESCRIPTION OF THE DRAWINGS

FIG. 1 shows an example system for reducing hallucinatory text generation by using shuffled training data, in accordance with one or more embodiments.
FIG. 2 shows an example conceptual architecture for reducing hallucinatory text generation by using shuffled training data, in accordance with one or more embodiments.
FIG. 3 shows a flowchart of a process for reducing hallucinatory text generation by using shuffled training data, in accordance with one or more embodiments.

The technologies described herein will become more apparent to those skilled in the art by studying the detailed description in conjunction with the drawings. Embodiments of implementations describing aspects of the invention are illustrated by way of example, and the same references can indicate similar elements. While the drawings depict various implementations for the purpose of illustration, those skilled in the art will recognize that alternative implementations can be employed without departing from the principles of the present technologies. Accordingly, while specific implementations are shown in the drawings, the technology is amenable to various modifications.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

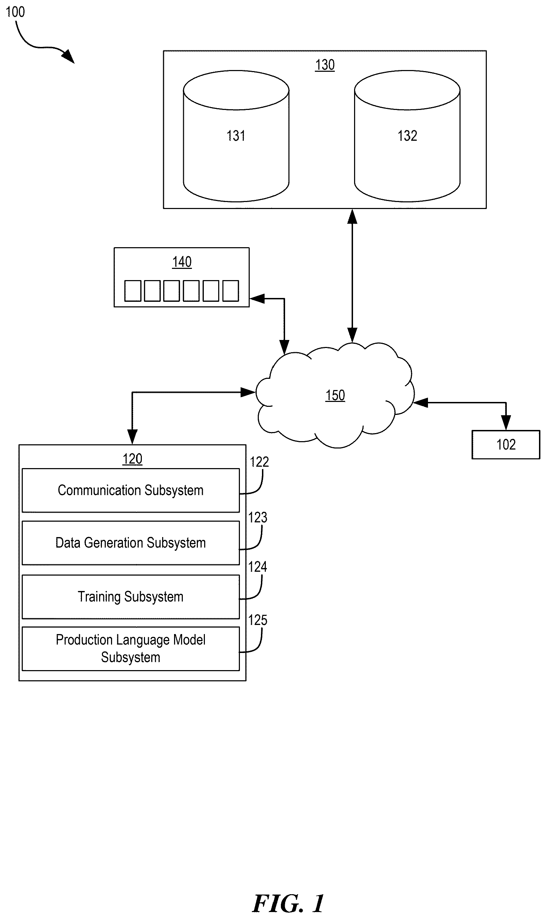

FIG. 1 shows an example system 100 for reducing hallucinatory text generation by using shuffled training data, in accordance with one or more embodiments. A system 100 includes a client device 102 in communication with a server 120 via a network 150. As will be described further in this disclosure, the server 120 may perform operations to reduce the likelihood of hallucinatory text generation by using shuffled training data.

Some embodiments may retrieve training samples that include training contexts, training prompts, and training answers. Some embodiments may then generate training data for which a language model should not be generating answers matching the training answers by shuffling the training contexts with respect to the training answers. For example, a first context that is associated with a first prompt in the training samples may be de-associated from the first prompt in the shuffled training sample and re-associated with a second prompt in the shuffled training samples. Shuffling training samples may help increase the likelihood that a model trained on the shuffled samples are exposed to contexts is similar in semantics to real-world scenarios and further are trained to recognize differences between contexts and prompts as a paired set. Without such shuffling, language models may instead be trained to incorrectly respond to certain features found in contexts or features found in prompts as incorrect. Some embodiments may then train a language model to output a response indicating a lack of knowledge based on the shuffled training samples.

Some embodiments may retrieve training samples comprising training contexts and training prompts and then generate shuffled training samples by shuffling the training contexts with respect to the training answers. Some embodiments may then utilize the shuffled training samples and a training answer to train a language model to highlight a knowledge gap when a context does not provide sufficient answers to answer a prompt. Some embodiments may then use this trained language model in a production environment such that a user may be informed that there is insufficient information to answer the query or be directed to an appropriate data source instead of hallucinating an inaccurate response.

The client device 102 may include one of various types of computer devices usable as a client-side device, such as a laptop, data terminal, mobile computing device, etc. The client device 102 may send requests, responses, or other messages to the server 120 that may require communication with other computing devices or other electronic devices. Additionally, the server 120 may include various types of computing units, such as physically separate servers, virtual nodes hosted on one or more physical machines, or nodes on a cloud computing system. Applications, services, or other operations may use data provided by the client device 102, the server 120, a distributed cache system 140, or a set of databases 130 that includes a first networked database 131 and a second networked database 132. The set of databases 130 may include various types of databases, such as SQL databases, no SQL databases, graph databases, etc. In some embodiments, the server 120 may perform one or more operations related to a communication subsystem 122, a data generation subsystem 123, a training subsystem 124, or a production language model subsystem 125.

In some embodiments, the communication subsystem 122 may obtain program instructions, commands, parameters, values, or other data from the client device 102, the set of databases 130, or the distributed cache system 140. For example, the communication subsystem 122 may retrieve a set of parameters from the set of databases 130. Furthermore, operations performed by the server 120 may use the communication subsystem 122 to send messages to the set of databases 130, the client device 102, the distributed cache system 140, or another computing device described in this disclosure. Furthermore, some embodiments may use the communication subsystem 122 to communicate with one or more remote computing devices to offload some or all of the operations described in this disclosure. For example, some embodiments may use the communication subsystem 122 to retrieve training samples that include training contexts, training prompts, and training answers. For example, a training sample may include a context related to infrastructure configuration, a prompt requesting appropriate configuration set-up for a small data experiment, and a training answer that provides the correct configuration for the small data experiment using data from the context. Some embodiments may use the communication subsystem 122 to retrieve this training sample from the set of databases 130.

In some embodiments, the data generation subsystem 123 may obtain or generate training for training operations. Some embodiments may obtain or generate training samples by shuffling the training contexts of the training data. Shuffling the training data may include shuffling the training context with respect to input context, where a context associated with a first prompt in a set of training samples may be re-associated with a second prompt in the shuffled training samples. For example, some embodiments may obtain a training set of 100 data samples, where each sample includes context text, prompt text, and answer text. Some embodiments may then use a random-number-based shuffling method to change a first context that includes a conversation between a user and an agent related to the domain category of hardware configuration to an association between the first context and a second prompt that was originally related to financial data processing. By shuffling these agentic conversations, some embodiments may improve the accuracy of language model when playing a role in agentic conversations.

In some embodiments, the data generation subsystem 123 may perform filtering and data modification operations to prepare multiple types of samples to train a language model. For example, the data generation subsystem 123 may receive 1,000 initial samples containing a context, prompt, and answer. For example, the data generation subsystem 123 may then select 672 samples (or some other number of samples) after validation. It should be understood that the data generation subsystem 123 may receive some other number of samples and select some other number of samples, such that the data generation subsystem 123 may receive more than 10, more than 100, more than 1,000, more than 10,000, or more than 10,000,000 initial samples, and select more than 10, more than 100, more than 1,000, more than 10,000, or more than 10,000,000 samples after validation. In some embodiments, the data generation subsystem 123 may further generate a second set of training samples from call transcripts to increase the types of data that can be processed and to better align the data with real-world production usage. Some embodiments may then construct a third set of training data with questions that have incorrect context to mimic situations when a RAG subsystem did not retrieve relevant documents. Some embodiments may train the model to respond with "I don't know" when the context does not contain the information needed to answer the question, such as with the third set of training data.

In some embodiments, the data generation subsystem 123 may generate training samples with incorrect or irrelevant context. Alternatively, or additionally, the data generation subsystem 123 may modify existing data to generate training samples that are to be used to indicate a knowledge gap. For example, the data generation subsystem 123 may select questions from an initial 1000 samples that were filtered out and randomly shuffle the context for all the questions. Some embodiments may then compute fuzzy match scores between a respective and a context and a respective ideal answer to use as similarity scores. As described elsewhere, some embodiments may then use these similarity scores to rank training samples.

In some embodiments the training subsystem 124 may train one or more language models based on the shuffled data produced by the data generation subsystem 123. In some embodiments, After the server 120 obtains a set of training samples from the set of databases 130, the training subsystem 124 may load a language model from the set of databases 130 or access a language model via the network 150. Some embodiments may use the training subsystem 124 to train a language model by updating the foundation portion of the language model or a downstream layer used to specify or refine the output of the foundation portion. The training subsystem 124 may perform cross-validation operations, where the training subsystem 124 may divide the set of training samples into multiple folds constructed from shuffled training samples. Some embodiments may iteratively train on different combinations of these folds. For each fold, the training subsystem 124 may create a training loop where the training subsystem 124 may feed batches from the current training fold through the language model, calculate a loss function value (e.g., how far off the model's output is from a desired output with respect to semantic meaning).

The training subsystem 124 may update a language model's weights using backpropagation while using the held-out fold for validation. The training subsystem 124 may update appropriate hyperparameters like learning rate, batch size, and a number of training epochs. For example, the training subsystem 124 may determine hyperparameters such as a number of training epochs, a learning rate, optimizer, a maximum sequence length for an input to the language model, a maximum number of new tokens that can be generated for an output, a learning rate schedule type indicating the learning rate as a function of the number of epochs, and or batch size or gradient accumulation step value.

During training, the training subsystem 124 may monitor the loss to ensure it may be decreasing and may implement early stopping to prevent overfitting. Once cross-validation may be complete, the training subsystem 124 may select the best performing model configuration and may retrain on the entire set of training samples. Finally, the training subsystem 124 may validate the model's performance on a separate set of testing samples to ensure it may be actually learning the desired behavior and not just memorizing the set of training samples.

In some embodiments, one or more components of the system 100 may work to reduce the risk of hallucinations without increasing the risk of catastrophic forgetting or toxicity. Some embodiments may retrieve, process, or summarize content from relevant documents by using an LLM in a Retrieval Augmented Generation (RAG) framework to develop the question answering/summarization system. Some embodiments have fine-tuned the LLMs to customize and improve the alignment of answers with customer needs and improve accuracy. For example, some embodiments may be fine-tuned an LLM with open-source libraries or custom libraries.

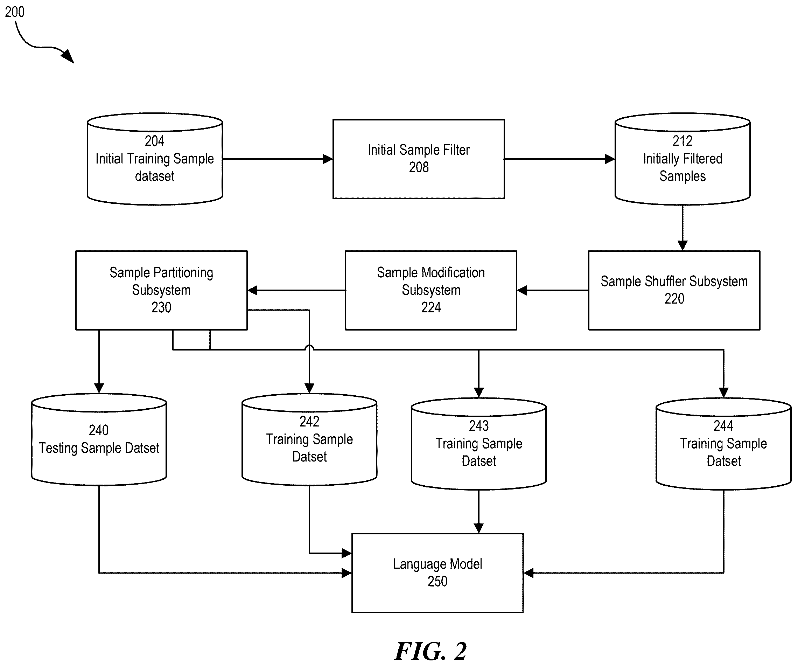

FIG. 2 shows an example conceptual architecture 200 for reducing hallucinatory text generation by using shuffled training data, in accordance with one or more embodiments. Some embodiments may retrieve an initial training samples dataset 204. Some embodiments may direct the initial training samples dataset 204 to an initial sample filter 208. The initial sample filter 208 may determine similarity scores based on the contexts of the initial training samples dataset 204. For example, some embodiments may calculate similarity scores between different components of the initial training samples dataset 204, such as context-answer pairs. This initial sample filter 208 may then be used to select the least similar samples for use as the initially filtered samples 212.

Some embodiments may send the initially filtered samples 212 to a sample shuffler subsystem 220, which shuffles the initially filtered samples 212. Some embodiments may use one or more types of various types of shuffling operations to shuffle the initially filtered samples 212. For example, some embodiments may perform a Fisher-Yates shuffle, random number generator-based shuffling method, or a cryptographically secure algorithm to shuffle context data with respect to the prompts or answers paired with the context data.

The shuffled data is then forwarded to the sample modification subsystem 224. The sample modification subsystem may perform operations to sort the shuffled samples by recalculating similarity scores for the shuffled samples. For example, after being provided with shuffled training samples, some embodiments may use the sample modification subsystem 224 to determine the similarity scores between the contexts and answers or prompts of the shuffled samples (e.g., by determining cosine similarity scores). By recalculating these scores, some embodiments may identify which samples are more or less similar to each other and then use the sorted shuffled samples to increase the likelihood that training on the sorted shuffled samples will cover a wide range of topics on which a language may accurately indicate that there is a knowledge gap and the correct information is unlikely to be provided.

Following this, the modified data is sent to the sample partitioning subsystem 230. The samples partitioning subsystem 230 may partition the sample data into two distinct datasets: a testing sample dataset 240 and training sample datasets that includes a first training sample dataset 242, a second training sample dataset 243, and a third training sample dataset 244. Some embodiments may then perform training operations on a language model 250 with the first training sample dataset 242, the second training sample dataset 243, and the third training sample dataset 244. Some embodiments may then test the language model 250 based on the testing sample dataset 240. It should be understood that, while three training sample datasets are shown, some embodiments may partition samples into more or fewer batches of training samples.

As an example, some may train the language model 250 to respond with "I don't know" to a prompt when the context for the prompt does not contain an answer or the model cannot confidently answer the question (e.g., an associated confidence value for a model output is less than a confidence threshold). Some embodiments may create datasets with 5, 10, 15, 20, 25, and 50 samples associated with the least similarity scores between an ideal answer and an associated prompt (e.g., the first training sample dataset 242, the second training sample dataset 243, and the third training sample dataset 244). Some embodiments may add these datasets to the training set and fine-tune the language model 250. For example, some embodiments may compute a metric that measures accuracy on a test set of 50 samples with irrelevant context and train the language model 250 to achieve an accuracy of 1 on this set (e.g., meaning that the model responds with "I don't know" or another indication of a knowledge gap) for all 50 samples.

### Flowchart

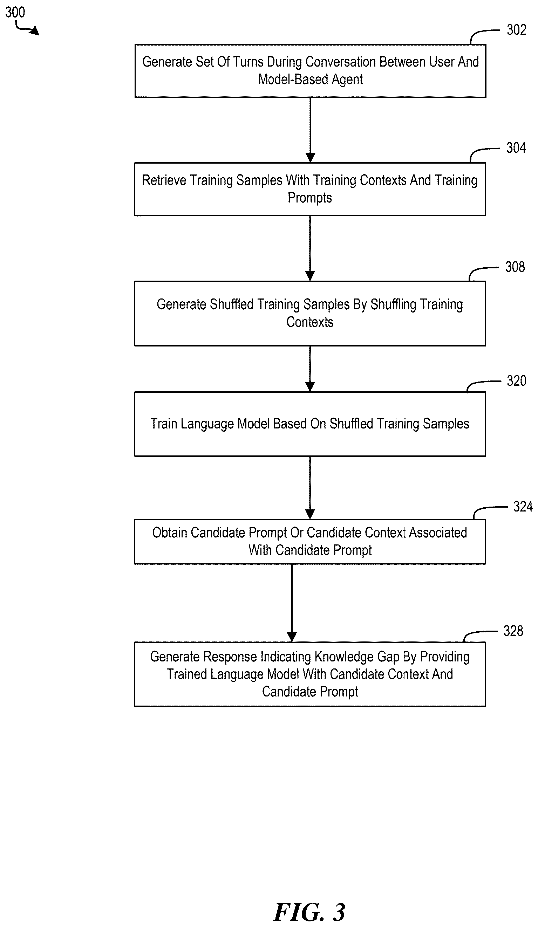

FIG. 3 shows a flowchart of a process 300 for reducing hallucinatory text generation by using shuffled training data, in accordance with one or more embodiments. Some embodiments may generate a set of turns during a conversation between a user and a model-based agent, as indicated by block 302. For example, for a first turn, a user may first state, via a chat interface or via voice, "Hi, I need help with my account," and some embodiments use a model-based agent to state, via the chat interface or an artificial voice system, "Could you please provide more details?" For a second turn, the user may then state, "It says my password is incorrect," and some embodiments use a model-based agent to state, via the chat interface or an artificial voice system, "have you tried resetting your password using the "Forgot Password?"

When generating a multi-turn conversation, some embodiments may use one or more generative language models, such as a transformer-based decoder-only LLM. Some embodiments may use generative adversarial networks to train a language model to generate responses. Alternatively, or additionally, some embodiments may use variational autoencoders, autoregressive models, or other machine learning models to generate text outputs.

Some embodiments may retrieve training samples with training contexts and training prompts, as indicated by block 304. Some embodiments may retrieve training samples that include training contexts, training prompts, and training answers, where each sample may include a context, a training prompt, and a training answer. For example, some embodiments may retrieve a training set of 1,000 data samples, where each sample includes context text, prompt text, and answer text. For instance, a training sample might include a context related to an agentic conversation history related to account sign-in between users and model-based agents. The training sample may also include documents retrieved based on the conversation history, a prompt requesting help on signing in, and a training answer that provides the correct configuration for the small data experiment using data from the context.

Some embodiments may retrieve a training data superset and determine a ranking of the training data superset based on indicated answer-prompt similarities of the training data superset. For example, some embodiments may retrieve a training data superset of 1,000 samples. They may then determine a ranking of these samples based on similarity scores (e.g., similarity scores between the answers and prompts, similarity scores between the contexts and answers, similarity scores between the contexts and the prompts, etc.). Some embodiments may then select the top 351 samples from this ranking for further training. For example, as discussed elsewhere in this application, some embodiments may shuffle these 351 samples, further determine similar scores for and sort the shuffled samples, perform training based on the shuffled samples, etc.

In some embodiments, the training samples used to train a language model may include a set of live conversation transcripts. For example, after a user and a human or computer agent communicates via videochat, phone, or text, some embodiments may generate a set of live conversation transcripts for agentic conversations involving one or more human agents or model-based agents and assign a set of categories to the transcripts. The categories may indicate intent, participant identifiers, domains of interest, organization names (e.g., organizations represented by the entity), etc. During training, some embodiments may tailor an LLM for a specific domain based on this category by selecting transcripts tagged with this category. For example, some embodiments may select transcripts tagged with "security management" to train an LLM to provide answers within the domain of security management. Alternatively, some embodiments may determine whether there is a knowledge gap in the domain of security management with respect to the context for a prompt.

Some embodiments may divide transcripts into prompts, contexts for the prompts, and answers to the prompts. For example, some embodiments may define, as a training context for a first sample, a first portion of a transcript that includes an initial greeting and a customer's description of their issue. Some embodiments may then define, as a prompt associated with the training context that is part of the first sample, the second portion of the same transcript, where this second portion includes the customer's question or request for assistance. Some embodiments may further define, as part of an answer associated with the training context and answer that is part of the first sample, a third portion of the same transcript, where this third portion includes an agent's response to the customer's question.

Some embodiments may generate shuffled training samples by shuffling training contexts, as indicated by block 308. In some embodiments, a computer system may retrieve training samples that include training answers corresponding with training prompts and training contexts, where each respective training answer is associated with a respective context and respective training prompt. Some embodiments may generate the shuffled training samples by generating sorted shuffled samples based on similarity scores between the training contexts and the training answers. For example, some embodiments may shuffle 1,000 training samples that include 1,000 training contexts coupled to 1,000 prompt-answer pairs such that some or all of the 1,000 contexts are no longer matching with their original 1,000 prompt-answer pairs.

Shuffling the context for use as training data provides a benefit in that such actions may help a language model focus on detecting discrepancies between a prompt and its context rather than just understanding the context in isolation. By randomly shuffling the context and then assigning the same context with both a "correct" answer and an "I don't know answer" based on an associated prompt, the model may be better trained to recognize when the provided context does not contain the necessary information to answer the question. This approach increases the likelihood that a model learns to respond with "I don't know" when the context is irrelevant or incorrect, thereby improving its accuracy and reliability in real-world applications. This method also helps in creating a robust model that can handle situations where the information retrieval system fails to provide relevant documents, ensuring that the model does not generate misleading or incorrect answers.

Similarity scores may be determined in one or more ways, such as by cosine similarity of word/phrase embeddings, transformer-based embedding comparisons, and TF-IDF vector analysis. For example, some embodiments may determine the angle between vector representations of context-answer pairs and use word vector representations as points in a high-dimensional space to measure semantic closeness. To do so, some embodiments may calculate the cosine of the angle between two vectors representing a pair of words of context-answer pairs by computing the dot product of the respective vectors and divide the result by the product of their magnitudes. Some embodiments may then sort the samples based on their scores and select a subset of the sorted shuffled samples for training operations. For example, some embodiments may select the least similar 1,000 samples of 5,000 sorted shuffled samples for use as training data.

After sorting shuffled training samples, some embodiments may partition or otherwise assign different subsets of the samples for different tasks. Some embodiments may partition the sorted shuffled samples into a testing subset and a training subset, wherein similarity scores of the testing subset indicate lesser similarity than similarity scores of the training subset. For example, some embodiments may obtain 80 sorted samples, allocate 40 samples of the 80 samples to a testing subset, and allocate the remaining 40 samples to a training subset. Some embodiments may then generate an initial trained model by training the language model based on the training subset and then determine a test result of the initial trained model by testing the initial trained model based on the testing subset. For example, some embodiments may generate an initial trained model by training the language model using 50 samples from a training subset and then determine a test result of the initial trained model by testing it with a remaining 50 samples from the testing subset. Some embodiments may adjust a configuration parameter of the language model or the training of the language model based on the test result. For example, based on a determination that a testing subset accuracy is not accurate, some embodiments may adjust a learning rate, a batch size, or a regularization parameter (e.g., modifying dropout rates), model architecture parameters (e.g., number of layers, hidden layer sizes, etc.), etc.

**In** some embodiments, the allocation of samples to training sets or testing sets may be random. Alternatively, the allocation may be based on assigning the more dissimilar context-answer pairs to the training set and the less dissimilar context-answer pairs to a testing set. In this case, the similarity scores of the testing subset would indicate lesser similarity than the similarity scores of the training subset, which increases the likelihood of greater accuracy at the completion of training operations for generating answers indicating a knowledge gap.

Some embodiments may train a language model based on the shuffled training samples, as indicated by block 320. Some embodiments may collect training samples (e.g., a first set of the 50 most dissimilar context-answer pairs of a batch of 100 context-answer pairs) and perform training operations on a language model based on the training samples while training the language model to generate answers indicating a knowledge gap (e.g., output "I don't know," "I don't have sufficient knowledge," etc.). After training, some embodiments may be evaluated using separate testing samples, such as the second set of 50 most dissimilar context-answer pairs to assess the accuracy of the language model to successfully generate answers indicating a knowledge gap.

When training, some embodiments may train a foundation model of an LLM. For example, some embodiments may directly adjust the neural network weights of the foundation model of an LLM. Alternatively, some embodiments may perform fine-tuning adjustments. Various types of fine-tuning operations may be performed, such as Low-Rank Adaptation (LoRA), parameter-efficient fine-tuning (PEFT) techniques like prefix tuning, or the insertion operations involving inserting small neural network modules between existing model layers using adapter methods. For example, a language model includes, as a part of an initial set of model parameters, values for a 1024-dimensional weight matrix. Some embodiments may then create a down-projection matrix that reduces the dimensionality of the 1024-dimensional weight matrix to 32 dimensions and generate an up-projection matrix that reconstructs this dimensionality. For example, some embodiments may determine a multiplication result as a product of the down-projection matrix and the up-projection matrix (e.g., a product of the down-projection matrix, the 1024-dimensional weight matrix, and the up-projection matrix). Some embodiments may then use the multiplication result to perturb the 1024-dimensional weight matrix (e.g., via addition) or otherwise modify the 1024-dimensional weight matrix. Some embodiments may perform low-rank perturbations of the model's weights to modify the values of this initial set of model parameters to determine whether improvements to accuracy occur by perturbing or otherwise updating one or more values of the down-projection matrix or the up-projection matrix.

Some embodiments may train a language model to train a language model on the shuffled training samples by using a training superset that includes the shuffled training samples and one or more samples of the non-shuffled training samples. For example, some embodiments may initially obtain an initial set of training samples and then perform operations described in this disclosure to obtain shuffled training samples based on the initial set of training samples. Some embodiments may then train a language model based on both the initial set of training samples and the shuffled training samples, such that the training data used to train the language model includes the same context in two different samples. For example, a first version of the context "client wants account information" is associated with the prompt "what is my account number" and the answer "your account number is 115" in a first sample of an initial set of training samples. A second version of this same context "client wants account information" may also be associated with the prompt "who has entered data" with the answer "I don't know" in a second sample from the shuffled set. Some embodiments may then train a language model with both the first sample and the second sample.

Some embodiments may include additional considerations for the performance of RAG techniques. Based on a prompt or an existing context, some embodiments may retrieve additional text data for use as additional context for an LLM input. For example, after receiving the question "How do I troubleshoot a network connectivity issue in a Kubernetes cluster?", some embodiments may retrieve relevant documentation from a knowledge base about Kubernetes networking and include this documentation in the context of an LLM input. Some embodiments may train a language model to produce answers indicating a knowledge gap even when such additional context data is retrieved, where such operations may help prevent general or generic information from creating hallucinations in LLM outputs.

Some embodiments may obtain a candidate prompt or a candidate context associated with the candidate prompt, as indicated by block 324. Some embodiments may access a language model through one or more interfaces, such as application-based interactions and API integrations. Some embodiments may engage with the LLM through a user-friendly web interface or chat platform, where a user may directly type prompts and receive immediate responses. Alternatively, some embodiments may include one or more API endpoints that permit communications with a language model. For example, some embodiments may receive a candidate input and send the candidate input to an API endpoint of a language model via an HTTP request.

Some embodiments may generate responses indicating knowledge gaps by providing a language model with the candidate context and the candidate prompt, as indicated by block 328. As described elsewhere, some embodiments may have trained multiple language models for different domains or otherwise the trained language models with different categories. For example, some embodiments may retrieve first samples assigned with a first category representing a first domain (e.g., a name for a first organization) and retrieve second samples assigned with a second category representing a second domain (e.g., a name for a second organization). Some embodiments may then perform the operations to shuffle these different data, sort them based on context-answer similarity, and perform training. For example, some embodiments may generate a first language model configured with a first set of model parameter values associated with the first domain (e.g., a set of weights, LoRA parameters, hyperparameters, etc. are associated with the first domain). Some embodiments may further generate a second language model configured with a second set of model parameter values associated with the second domain. Furthermore, it should be understood that different language models may be generated in different ways. For example, a second language model may have been generated without using a shuffled set of samples.

When obtaining a candidate prompt, some embodiments may use a RAG framework or perform related operations to retrieve related data for a context based on a prompt. Some embodiments may retrieve relevant documents to a prompt and provide the retrieved data as context for a language model. Some embodiments may then use the retrieved context to determine a category to assign to the prompt. For example, some embodiments may retrieve a prompt, retrieve a document associated with the label "cn11," and, in response, label the prompt with "cn11."

When receiving a candidate prompt, some embodiments may then determine which category to assign to the candidate prompt and, based on the category, select a language model to generate a candidate answer for the prompt. For example, some embodiments may obtain a first candidate prompt "what is my record ID" and assign the prompt with the category "account management" before diverting the first candidate prompt to a first language model associated with the category "account management." Some embodiments may then obtain a second candidate prompt "am I myself" and assign the prompt with the category "existential question" before diverting the first candidate prompt to a second language model associated with the category "existential question."

**In** some embodiments, the category used to select a language model for use may be associated with a user category that is assigned to one or more user records. For example, some embodiments may fine tune a first language model to be adapted to user records associated with a first user category representing users of a first region and a second language model to be adapted to user records associated with a second user category representing users of a second region. Some embodiments may then select a language model based on the second category.

In some embodiments, the category used to select a language model for use may be associated with a knowledge domain related to an application. For example, some embodiments may fine tune a first language model to be adapted to the knowledge domain "revenue cycle" and a second language model to be adapted to the knowledge domain "hardware infrastructure." Some embodiments may then select a language model for use based on whether an incoming candidate prompt is associated with one or more applications associated with that knowledge domain. For example, some embodiments may obtain a candidate prompt via an application "Infrastructure Helper" and select the second language model associated with the second knowledge domain "hardware infrastructure" to generate an output based on the prompt.

Some embodiments may use one or more classification methods to assign a category to a prompt. For example, some embodiments may use machine learning algorithms like support vector machines or neural networks to assign categories to text by analyzing features and calculating a confidence score for each potential classification. Some embodiments may examine word frequencies, sentiment, and contextual cues to determine whether an email belongs to categories like "code blue," "revenue," or "python," and assign a confidence percentage to each potential category of a set of categories. Some embodiments may then compare the confidence values with each other to determine which confidence values satisfies a confidence threshold and then select one or more confidences that satisfy the confidence threshold (e.g., by assigning a category with the greatest threshold-satisfying confidence to a prompt).

The above-described embodiments of the present disclosure are presented for purposes of illustration and not of limitation, and the present disclosure is limited only by the claims which follow. Furthermore, it should be noted that the features and limitations described in any embodiment may be applied to one or more other embodiments herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods. Furthermore, not all operations of a flowchart need to be performed. In addition, the systems and methods described herein may be performed in real time. It should also be noted that the systems and/or methods described above may be applied to, or used in accordance with, other systems and/or methods.

Furthermore, the computing devices described in this disclosure may be any type of computing device unless otherwise stated, including, but not limited to, a laptop computer, a tablet computer, a hand-held computer, and/or other computing equipment (e.g., a server), including "smart," wireless, wearable, and/or mobile devices. For example, while the client device 102 of FIG. 1 may be a laptop device, another type of mobile computing device may be possible. Furthermore, the embodiments described in this disclosure may include an individual device that performs some or all the operations described in this disclosure. Alternatively, other embodiments may include multiple computing devices acting collectively to perform some or all the operations described in this disclosure.

As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety (i.e., the entire portion), of a given item (e.g., data) unless the context clearly dictates otherwise. Furthermore, a "set" may refer to a singular form or a plural form, such that a "set of items" may refer to one item or a plurality of items.

**In** some embodiments, the operations described in this disclosure may be implemented in a set of processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on one or more non-transitory, machine-readable media (e.g., a set of machine-readable storage media), such as an electronic storage medium. Furthermore, the use of the term "media" may include a single medium or combination of multiple media, such as a first medium and a second medium. One or more non-transitory machine-readable media storing instructions may include instructions included on a single medium or instructions distributed across multiple media. For example, non-transitory media may act as one or more memory, where one or more memory may store program instructions that are written as source files or written in machine-executable program code. The processing devices may include one or more devices configured through hardware, firmware, and/or software to be specifically designed for the execution of one or more of the operations of the methods.

In some embodiments, the various computer systems and subsystems illustrated in FIG. 1 or FIG. 2 may include one or more computing devices that are programmed to perform the functions described herein. The computing devices may include one or more electronic storages (e.g., a set of databases accessible to one or more applications depicted in the system 100), one or more physical processors programmed with one or more computer program instructions, and/or other components. For example, the set of databases may include one or more relational databases. Alternatively, or additionally, the set of databases or other electronic storage used in this disclosure may include one or more non-relational databases.

The computing devices may include communication lines or ports to enable the exchange of information with a set of networks (e.g., a network used by the system 100) or other computing platforms via wired or wireless techniques. The network may include the internet, a mobile phone network, a mobile voice or data network (e.g., a 5G or Long-Term Evolution (LTE) network), a cable network, a public switched telephone network, or other types of communication networks or combination of communication networks. A network described by devices or systems described in this disclosure may include one or more communications paths, such as Ethernet, a satellite path, a fiber-optic path, a cable path, a path that supports internet communications (e.g., IPTV), free-space connections (e.g., for broadcast or other wireless signals), Wi-Fi, Bluetooth, near field communication, or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Each of these devices described in this disclosure may also include electronic storages. The electronic storage may include one or more non-transitory machine-readable media (e.g., storage media) that electronically stored information. The storage media of the electronic storages may include one or both of (i) system storage that is provided integrally (e.g., substantially non-removable) with servers or client computing devices, or (ii) removable storage that is removably connectable to the servers or client computing devices via port (e.g., a USB port, a firewire port, etc.) or drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). An electronic storage may store software algorithms, information determined by the processors, information obtained from servers, information obtained from client computing devices, or other information that enables the functionality as described herein.

The processors may be programmed to provide information processing capabilities in the computing devices. As such, the processors may include one or more of a digital processor, an analog processor, a digital circuit designed to process information, an analog circuit designed to process information, a state machine, and/or other mechanisms for electronically processing information. In some embodiments, the processors may include a plurality of processing units. These processing units may be physically located within the same device, or the processors may represent the processing functionality of a plurality of devices operating in coordination. The processors may be programmed to execute computer program instructions to perform functions described herein of subsystems described in this disclosure or other subsystems. The processors may be programmed to execute computer program instructions by software; hardware; firmware; some combination of software, hardware, or firmware; and/or other mechanisms for configuring processing capabilities on the processors.

It should be appreciated that the description of the functionality provided by the different subsystems described herein is for illustrative purposes, and is not intended to be limiting, as any of the subsystems described in this disclosure may provide more or less functionality than is described. For example, one or more of subsystems described in this disclosure may be eliminated, and some or all of its functionality may be provided by other ones of subsystems described in this disclosure. As another example, additional subsystems may be programmed to perform some, or all of the functionality attributed herein to one of the subsystems described in this disclosure.

With respect to the components of computing devices described in this disclosure, each of these devices may receive content and data via input/output (I/O) paths. Each of these devices may also include processors and/or control circuitry to send and receive commands, requests, and other suitable data using the I/O paths. The control circuitry may comprise any suitable processing, storage, and/or I/O circuitry. Further, some or all of the computing devices described in this disclosure may include a user input interface and/or user output interface (e.g., a display) for use in receiving and displaying data. In some embodiments, a display such as a touchscreen may also act as a user input interface. It should be noted that in some embodiments, one or more devices described in this disclosure may have neither user input interface nor displays and may instead receive and display content using another device (e.g., a dedicated display device such as a computer screen and/or a dedicated input device such as a remote control, mouse, voice input, etc.). Additionally, one or more of the devices described in this disclosure may run an application (or another suitable program) that performs one or more operations described in this disclosure.

Although the present invention has been described in detail for the purpose of illustration based on what is currently considered to be the most practical and preferred embodiments, it is to be understood that such detail is solely for that purpose and that the invention is not limited to the disclosed embodiments but, on the contrary, is intended to cover modifications and equivalent arrangements that are within the scope of the appended claims. For example, it is to be understood that the present invention contemplates that, to the extent possible, one or more features of any embodiment may be combined with one or more features of any other embodiment.

As used throughout this application, the word "may" is used in a permissive sense (i.e., meaning having the potential to), rather than a mandatory sense (i.e., meaning must). The words "include," "including," "includes," and the like mean including, but not limited to. As used throughout this application, the singular forms "a," "an," and "the" include plural referents unless the context clearly indicates otherwise. Thus, for example, reference to "an element" or "the element" includes a combination of two or more elements, notwithstanding the use of other terms and phrases for one or more elements, such as "one or more." The term "or" is non-exclusive (i.e., encompassing both "and" and "or"), unless the context clearly indicates otherwise. Terms describing conditional relationships (e.g., "in response to X, Y," "upon X, Y," "if X, Y," "when X, Y," and the like) encompass causal relationships in which the antecedent is a necessary causal condition, the antecedent is a sufficient causal condition, or the antecedent is a contributory causal condition of the consequent (e.g., "state X occurs upon condition Y obtaining" is generic to "X occurs solely upon Y" and "X occurs upon Y and Z"). Such conditional relationships are not limited to consequences that instantly follow the antecedent obtaining, as some consequences may be delayed, and in conditional statements, antecedents are connected to their consequents (e.g., the antecedent is relevant to the likelihood of the consequent occurring). Statements in which a plurality of attributes or functions are mapped to a plurality of objects (e.g., a set of processors performing steps/operations A, B, C, and D) encompass all such attributes or functions being mapped to all such objects and subsets of the attributes or functions being mapped to subsets of the attributes or functions (e.g., both/all processors each performing steps/operations A-D, and a case in which processor 1 performs step/operation A, processor 2 performs step/operation B and part of step/operation C, and processor 3 performs part of step/operation C and step/operation D), unless otherwise indicated. Further, unless otherwise indicated, statements that one value or action is "based on" another condition or value encompass both instances in which the condition or value is the sole factor and instances in which the condition or value is one factor among a plurality of factors.

Unless the context clearly indicates otherwise, statements that "each" instance of some collection has some property should not be read to exclude cases where some otherwise identical or similar members of a larger collection do not have the property (i.e., each does not necessarily mean each and every). Limitations as to the sequence of recited steps should not be read into the claims unless explicitly specified (e.g., with explicit language like "after performing X, performing Y") in contrast to statements that might be improperly argued to imply sequence limitations (e.g., "performing X on items, performing Y on the X'ed items") used for purposes of making claims more readable rather than specifying a sequence. Statements referring to "at least Z of A, B, and C," and the like (e.g., "at least Z of A, B, or C"), refer to at least Z of the listed categories (A, B, and C) and do not require at least Z units in each category. Unless the context clearly indicates otherwise, it is appreciated that throughout this specification discussions utilizing terms such as "processing," "computing," "calculating," "determining," or the like refer to actions or processes of a specific apparatus, such as a special purpose computer or a similar special purpose electronic processing/computing device. Furthermore, unless indicated otherwise, updating an item may include generating the item or modifying an existing item. Thus, updating a record may include generating a record or modifying the value of an already-generated value in a record. Additionally, as used in the specification, "a portion" refers to a part of, or the entirety of (i.e., the entire portion), a given item (e.g., data) unless the context clearly dictates otherwise.

Unless the context clearly indicates otherwise, ordinal numbers used to denote an item do not define the item's position. For example, an item that may be a first item of a set of items even if the item is not the first item to have been added to the set of items or is otherwise indicated to be listed as the first item of an ordering of the set of items. Thus, for example, if a set of items is sorted in a sequence from "item 1," "item 2," and "item 3," the first item of a set of items may be "item 2" unless otherwise stated.

### Enumerated Embodiments

The present techniques will be better understood with reference to the following enumerated clauses:
1. A method comprising: generating shuffled training samples by shuffling training contexts of training samples with respect to prompts of the training samples; and training a language model based on the shuffled training samples and a training answer indicating a knowledge gap.
2. A method comprising: retrieving training samples comprising training contexts, training prompts, wherein each respective training sample comprises a respective context and a respective training prompt; generating shuffled training samples by shuffling the training contexts, wherein a first context that is associated with a first prompt in the training samples is re-associated with a second prompt in the shuffled training samples; training a language model based on the shuffled training samples and a training answer indicating a knowledge gap; and generating a response indicating the knowledge gap by providing the language model with a candidate context and a candidate prompt.
3. A method comprising: one or more processors; and one or more non-transitory computer-readable media storing program instructions that, when executed by the one or more processors, cause the one or more processors to perform operations comprising: retrieving training samples comprising training contexts, training prompts, and training answers, wherein each respective training sample comprises a respective context, a respective training prompt, and a respective training answer; generating shuffled training samples by shuffling the training contexts with respect to the training answers, wherein a first context that is associated with a first prompt in the training samples is de-associated from the first prompt in the shuffled training samples and is re-associated with a second prompt in the shuffled training samples; training a language model based on the shuffled training samples and a training answer indicating a knowledge gap; and generating a response indicating the knowledge gap by providing the language model with a candidate context and a candidate prompt.
4. A method for reducing hallucinatory text generation, comprising: retrieving training samples comprising training contexts, training prompts, wherein each respective training sample comprises a respective context and a respective training prompt; generating shuffled training samples by shuffling the training contexts, wherein a first context that is associated with a first prompt in the training samples is re-associated with a second prompt in the shuffled training samples; training a language model based on the shuffled training samples and a training answer indicating a knowledge gap; and generating a response indicating the knowledge gap by providing the language model with a candidate context and a candidate prompt.
5. The method of any of the embodiments above, wherein: the training samples comprises training answers; each respective training sample further comprises a respective training answer associated with the respective context and the respective training prompt; generating the shuffled training samples comprises generating sorted shuffled samples by sorting the shuffled training samples based on similarity scores between the training contexts and the training answers; and training the language model comprises training the language model based on the sorted shuffled samples.
6. The method of claim 3, further comprising: partitioning the sorted shuffled samples into a testing subset and a training subset, wherein similarity scores of the testing subset indicate lesser similarity than similarity scores of the training subset; generated an initial trained model by training the language model based on the training subset; determining a test result of the initial trained model by testing the initial trained model based on the testing subset; and adjusting a configuration parameter of the language model or the training of the language model based on the test result.
7. The method of claim 3, further comprising generating the similarity scores by:
   determining respective vectors for context-answer pairs of the shuffled training samples;
   determining a dot product of the respective vectors; and dividing the dot product by a product of the respective vectors.
8. The method of any of the embodiments above, wherein retrieving the training samples comprises: retrieving a training data superset; determining a ranking of the training data superset based on indicated answer-prompt similarities of the training data superset; and selecting samples of the training samples based on the ranking.
9. The method of any of the embodiments above, wherein training the language model based on the shuffled training samples comprises training the language model based on a training superset comprising the shuffled training samples and one or more samples of the training samples, and wherein a first sample of the training superset comprises a first version of the first context that is associated with the first prompt.
10. The method of any of the embodiments above, wherein: the language model comprises an initial set of model parameters, a down-projection matrix, and an up-projection matrix; parameters of the language model used to generate outputs of the language model are determined based on a perturbation of the initial set of model parameters and a multiplication result; the multiplication result is a product of the down-projection matrix and the up-projection matrix; and training the language model comprises updating one or more values of the down-projection matrix or the up-projection matrix.
11. The method of any of the embodiments above, wherein: training the language model comprises, for a first shuffled sample comprising the first context and the second prompt: retrieving additional context data based on the first context or the second prompt; and training the language model based on the second prompt, the additional context data, the first context, and a first training answer indicating the knowledge gap.
12. The method of any of the embodiments above, further comprising selecting a set of live conversation transcripts based on a category, wherein the training samples comprise the set of live conversation transcripts.
13. The method of claim 10, wherein: a first sample of the training samples comprises a first training context and a first training prompt; a first portion of a first transcript of the set of live conversation transcripts is used to generate the first training context; and a second portion of the first transcript of the set of live conversation transcripts is used to generate the first training prompt.
14. The method of any of the embodiments above, wherein: the training samples are first training samples; retrieving the first training samples comprises retrieving the first training samples from data tagged with a first category; the shuffled training samples are first shuffled training samples; training the language model based on the first shuffled training samples comprises updating the language model to comprise a first set of model parameter values; the candidate prompt is a first candidate prompt; the candidate context is a first candidate context; providing the language model with the first candidate prompt comprises: determining a first result indicating that the first candidate prompt is associated with the first category; and providing the first candidate prompt to a version of the language model configured with the first set of model parameter values based on the first result; and the method further comprising generating a second response by: determining a second result indicating that a second candidate prompt is associated with a second category; and providing the second candidate prompt to a version of the language model configured with a second set of model parameter values based on the second result.
15. The method of any of the embodiments above, further comprising: retrieving second training samples from data tagged with the second category; generating second shuffled training samples by shuffling the second training samples; and training the language model based on the second shuffled training samples to determine the second set of model parameter values for the language model.
16. The method of any of the embodiments above, further comprising: determining a user category associated with one or more user records; and determining the first category based on the user category.
17. The method of any of the embodiments above, wherein the first category indicates a knowledge domain, and wherein determining that the first candidate prompt is associated with the first category comprises determining an application used to access the language model.
18. The method of any of the embodiments above, wherein determining that the first candidate prompt is associated with the first category comprises: determining a first confidence for the first category based on the first candidate prompt or the first candidate context; determining a second confidence for the second category based on the first candidate prompt or the first candidate context; and comparing the first confidence and the second confidence to a confidence threshold.
19. A tangible, non-transitory, machine-readable medium storing instructions that, when executed by a data processing apparatus, cause the data processing apparatus to perform operations comprising those of any of embodiments 1-18.
20. A system comprising one or more processors; and memory storing instructions that, when executed by the processors, cause the processors to effectuate operations comprising those of any of embodiments 1-18.
21. A system comprising means for performing any of embodiments 1-18.

## Claims

1. A system for reducing hallucinatory text generation by using shuffled training data, the system comprising:
one or more processors; and
one or more non-transitory computer-readable media storing program instructions that, when executed by the one or more processors, cause the one or more processors to perform operations comprising:
retrieving training samples comprising training contexts, training prompts, and training answers, wherein each respective training sample comprises a respective context, a respective training prompt, and a respective training answer;
generating shuffled training samples by shuffling the training contexts with respect to the training answers, wherein a first context that is associated with a first prompt in the training samples is de-associated from the first prompt in the shuffled training samples and is re-associated with a second prompt in the shuffled training samples;
training a language model based on the shuffled training samples and a training answer indicating a knowledge gap; and
generating a response indicating the knowledge gap by providing the language model with a candidate context and a candidate prompt.

2. A method for reducing hallucinatory text generation, comprising:
retrieving training samples comprising training contexts, training prompts, wherein each respective training sample comprises a respective context and a respective training prompt;
generating shuffled training samples by shuffling the training contexts, wherein a first context that is associated with a first prompt in the training samples is re-associated with a second prompt in the shuffled training samples;
training a language model based on the shuffled training samples and a training answer indicating a knowledge gap; and
generating a response indicating the knowledge gap by providing the language model with a candidate context and a candidate prompt.

3. The method of claim 2, wherein:
the training samples comprises training answers;
each respective training sample further comprises a respective training answer associated with the respective context and the respective training prompt;
generating the shuffled training samples comprises generating sorted shuffled samples by sorting the shuffled training samples based on similarity scores between the training contexts and the training answers; and
training the language model comprises training the language model based on the sorted shuffled samples.

4. The method of claim 3, further comprising:
partitioning the sorted shuffled samples into a testing subset and a training subset, wherein similarity scores of the testing subset indicate lesser similarity than similarity scores of the training subset;
generated an initial trained model by training the language model based on the training subset;
determining a test result of the initial trained model by testing the initial trained model based on the testing subset; and
adjusting a configuration parameter of the language model or the training of the language model based on the test result.

5. The method of claim 3 or 4, further comprising generating the similarity scores by:
determining respective vectors for context-answer pairs of the shuffled training samples;
determining a dot product of the respective vectors; and
dividing the dot product by a product of the respective vectors.

6. The method of any one of claims 2 to 5, wherein retrieving the training samples comprises:
retrieving a training data superset;
determining a ranking of the training data superset based on indicated answer-prompt similarities of the training data superset; and
selecting samples of the training samples based on the ranking.

7. The method of any one of claims 2 to 6, wherein training the language model based on the shuffled training samples comprises training the language model based on a training superset comprising the shuffled training samples and one or more samples of the training samples, and wherein a first sample of the training superset comprises a first version of the first context that is associated with the first prompt.

8. The method of any one of claims 2 to 7, wherein:
the language model comprises an initial set of model parameters, a down-projection matrix, and an up-projection matrix;
parameters of the language model used to generate outputs of the language model are determined based on a perturbation of the initial set of model parameters and a multiplication result;
the multiplication result is a product of the down-projection matrix and the up-projection matrix; and
training the language model comprises updating one or more values of the down-projection matrix or the up-projection matrix.

9. The method of any one of claims 2 to 8, wherein:
training the language model comprises, for a first shuffled sample comprising the first context and the second prompt:
retrieving additional context data based on the first context or the second prompt; and
training the language model based on the second prompt, the additional context data, the first context, and a first training answer indicating the knowledge gap.

10. The method of any one of claims 2 to 9, further comprising selecting a set of live conversation transcripts based on a category, wherein the training samples comprise the set of live conversation transcripts;
wherein, optionally: a first sample of the training samples comprises a first training context and a first training prompt, a first portion of a first transcript of the set of live conversation transcripts is used to generate the first training context, and a second portion of the first transcript of the set of live conversation transcripts is used to generate the first training prompt.

11. The method of any one of claims 2 to 10, wherein:
the training samples are first training samples;
retrieving the first training samples comprises retrieving the first training samples from data tagged with a first category;
the shuffled training samples are first shuffled training samples;
training the language model based on the first shuffled training samples comprises updating the language model to comprise a first set of model parameter values;
the candidate prompt is a first candidate prompt;
the candidate context is a first candidate context;
providing the language model with the first candidate prompt comprises:
determining a first result indicating that the first candidate prompt is associated with the first category; and
providing the first candidate prompt to a version of the language model configured with the first set of model parameter values based on the first result; and
the method further comprising generating a second response by:
determining a second result indicating that a second candidate prompt is associated with a second category; and
providing the second candidate prompt to a version of the language model configured with a second set of model parameter values based on the second result.

12. The method of claim 11, further comprising one or both of:
(a) retrieving second training samples from data tagged with the second category; generating second shuffled training samples by shuffling the second training samples; and training the language model based on the second shuffled training samples to determine the second set of model parameter values for the language model; and
(b) determining a user category associated with one or more user records; and determining the first category based on the user category.

13. The method of claim 11 or 12, wherein the first category indicates a knowledge domain, and wherein determining that the first candidate prompt is associated with the first category comprises determining an application used to access the language model.

14. The method of any one of claims 11 to 13, wherein determining that the first candidate prompt is associated with the first category comprises:
determining a first confidence for the first category based on the first candidate prompt or the first candidate context;
determining a second confidence for the second category based on the first candidate prompt or the first candidate context; and
comparing the first confidence and the second confidence to a confidence threshold.

15. One or more non-transitory machine-readable media storing program instructions that, when executed by one or more processors, causes the one or more processors to carry out the method of any one of claims 2 to 14.
